# EUROPEAN PATENT APPLICATION

(11) **EP 1 882 890 A2**
(43) Date of publication of application: **30.01.2008**
(21) Application number: 07106117.0
(22) Date of filing: 13.04.2007
(51) Int. Cl.: F25B 27/02, F25B 13/00

(54) **Co-generation**

(30) Priority: 25.07.2006 KR 20060069782
(71) Applicant: LG Electronic Inc., Seoul 150-721 (KR)
(72) Inventor: CHO, Eun Jun, 102-1304 Hyundai Hometown, 422-751, Kyunggi-do (KR); HA, Sim Bok, 423-017, Kyungki-do (KR); KIM, Cheol Min, 641-180, Kyungsangnam-do (KR); CHANG, Se Dong, 423-060, Kyungki-do (KR)
(74) Representative: Vossius & Partner

(57) **Abstract**

Disclosed related to a co-generation according to the present invention has some advantages in that the heat of the refrigerant recovered at the supply heat exchanger (68) is used for the water boiling as well as the heat recovered at the drive source (120) is used for water boiling when the air conditioner (50) is under the air-cooling mode and has a water boiling request by comprised as an electric generator (110); a drive source (120) operating the electric generator (110); a waste heat recovery heat exchanger (130) recovering the exhaust gas heat of the drive source (120); a water boil heat exchanger (70) installed for boiling water; an air conditioner (50) air-conditioning indoor air; a radiant heat exchanger (160) radiating heat to outside; a supply heat exchanger (68) installed on the refrigerant path of the air conditioner (50); and a heat transfer path (170) connecting the waste heat recovery heat exchanger (130), water boil heat exchanger (70), and the radiant heat exchanger (160), and the supply heat exchanger (168).

## Description

The present invention relates to a co-generation and, more particularly, to a co-generation transferring waste heat of a waste heat recovery heat exchanger to the water boil heat exchanger and the supply heat exchanger or transferring the heat of the waste heat recovery heat exchanger and the supply heat exchanger to a water boil heat exchanger as the waste heat recovery heat exchanger recovering the waste heat of an engine, a water boil heat exchanger heating water, and the supply heat exchanger condensing/evaporating the refrigerant of the water boil heat exchanger are connected.

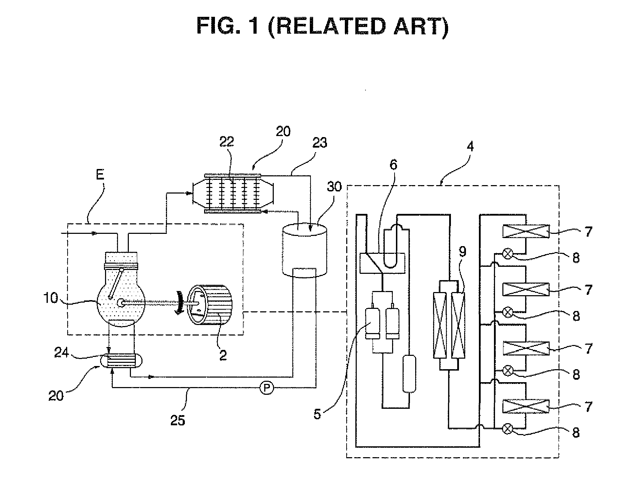

FIG. 1 is a block diagram of the co-generation according to the conventional art.

The conventional co-generation depicted in FIG 1 comprises an electric generator 2 generating electricity, a drive source 10 (hereinafter referred to as engine) such as an engine and etc generating heat as well as operating the electric generator 2, an waste heat recovery apparatus 20 recovering the heat of the exhaust gas generated from the engine 10, and a heat storage tank 30 at which the waste heat of the waste heat recovery apparatus 20 is used.

The electric generator 2 and the engine 10 are installed in the inside of an engine room E of a chassis formed apart from the heat required places 30.

The electricity generated at the electric generator 2 is supplied to the home appliances such as the various kinds of illuminators and the heat pump type air conditioner 4 and etc.

The heat pump type air conditioner 4 comprises a compressor 5, a 4-way valve 6, an indoor heat exchanger 7, an expanding apparatus 8, and an outdoor heat exchanger 9.

The refrigerant compressed in the compressor 5 is circulated to the compressor as passing the 4-way valve 6, the outdoor heat exchanger 9, the expanding apparatus 8, indoor heat exchanger 7, and the 4-way valve 6 in sequence when the heat pump type air conditioner 4 is in a cooling operation, therefore, the outdoor heat exchanger 9 operates as a condenser and the indoor heat exchanger 7 operates as an evaporator taking the heat from indoor air.

On the other hand, as the refrigerant compressed in the compressor 5 is circulated to the compressor as passing the order of the 4-way valve 6, the indoor heat exchanger 7, the expanding apparatus 8, outdoor heat exchanger 9, and the 4-way valve 6 when the heat pump type air conditioner 4 is in a heating operation, therefore, the outdoor heat exchanger 9 operates as a evaporator and the indoor heat exchanger 7 operates as a condenser warm the indoor air.

The waste heat recovery apparatus 20 comprises a waste heat recovery heat exchanger 22 taking the heat of the exhaust gas exhausted from the engine 10 and a cooling water heat exchanger 24 taking the heat of the cooling water which cools down the engine 10.

The waste heat recovery heat exchanger 22 is connected with the water boil tank 30 and the first heat supply line 23, and the waste heat took from the exhaust gas of engine is transferred to the heat storage tank 30 through the first heat supply line 23.

The cooling water heat exchanger 24 is connected with the heat storage tank 30 and the second heat supply line 25, and the heat took from the cooling water which cools down the engine 10 is transferred to the heat storage tank 30 through the second heat supply line 25.

The water boiling is connected with the heat storage tank 30.

The efficiency of the co-generation according to the conventional art cannot be maximized, since the waste heat of the engine 10 cannot be used for the heat pump type air conditioner 4, but only can be used for the water boiling.

The present invention is contrived to overcome problems of the conventional art, and an object of the present invention is to provide a co-generation minimizing the power consumption needed for operating of the air conditioner as well as maximizing the water boiling efficiency during the air-cooling operation of the air conditioner.

Another object of the present invention is to provide a co-generation preventing the reduction of the air warming capacity generated when the outdoor heat exchanger is frosted as well as boiling water during the air warming operation of the air conditioner.

Another object of the present invention is to provide a cogeneration minimizing the power consumption needed for the operation of the air conditioner by increasing the evaporation pressure of the air conditioner when the air conditioner is under the air-warming mode without the water boil request.

The co-generation according to the present invention to achieve the above mentioned object comprises an electric generator; a drive source operating the electric generator; a waste heat recovery heat exchanger recovering the waste heat of the drive source; a water boil heat exchanger boiling water; an air conditioner air-conditioning the indoor air; a radiant heat exchanger radiating heat to the outside; a supply heat exchanger installed on the refrigerant path of the air conditioner; and a heat transfer path connecting the waste heat recovery heat exchanger, the water boil heat exchanger, the radiant heat exchanger, and the supply heat exchanger.

The co-generation further comprises a water boil/ radiant heat exchanger bypassing apparatus for bypassing of the heat of the waste heat recovery heat exchanger through the water boil heat exchanger and the radiant heat exchanger; a radiant heat exchanger bypassing apparatus for bypassing of the heat of the radiant heat exchanger through the radiant heat exchanger; and a supplying heat exchanger bypassing apparatus for bypassing of the heat of the radiant heat exchanger through the supplying heat exchanger.

The water boil/ radiant heat exchanger bypassing apparatus includes a water boil/ radiant heat exchanger bypassing path formed at the heat transfer path; and a water boil/ radiant heat exchanger bypassing valve installed at the diverging point of the water boil/ radiant heat exchanger bypassing path and the heat transfer path.

The radiant heat exchanger bypassing apparatus includes a radiant heat exchanger bypassing path formed at the heat transfer path; and the radiant heat exchanger bypassing valve installed at the diverging point of the radiant heat exchanger bypassing path and the heat transfer path.

The supply heat exchanger bypassing apparatus includes a supply heat exchanger bypassing apparatus formed at the heat transfer path; and the supply heat exchanger bypassing valve installed at the diverging point of the supply heat exchanger bypassing path and the heat exchanger path.

The air conditioner is a heat pump type air conditioner including a compressor, a 4-way valve, an outdoor heat exchanger, an expansion apparatus, and the indoor heat exchanger.

The heat pump type air conditioner further includes an outdoor heat exchanger bypassing apparatus bypassing the refrigerant through the outdoor heat exchanger.

The supply heat exchanger is installed on the refrigerant path between the 4-way valve and the outdoor heat exchanger.

The co-generation further includes a heat storage tank connected with the water boil heat exchanger and the water circulation path, and the water supply tank connected with the water circulation path and the water supply path.

A heat storage circulation pump pumping the water in the heat storage tank to be circulated to the heat storage tank after passing through the water boil heat exchanger and a heat storage valve opening and shutting the water circulation path are installed at the water circulation path.

The co-generation according to the present invention configured as above has some advantages in that the water boiling capacity is maximized as the heat recovered from the drive source, such as engine and etc, is used for water boiling and the heat of the refrigerant recovered while the refrigerant is condensed at the supply heat exchanger is used for water boiling when the air conditioner is under the air cooling mode and the water boiling is required, and that the consumption electricity needed for operating the air conditioner is reduced as the condensing pressure is decreased.

Furthermore, the co-generation of the present invention has an advantage in that the water boiling capacity is maximized as the refrigerant is evaporated only at the heat exchanger and not passing through the supply heat exchanger when the air conditioner is under the air-warming mode and has a water boiling request.

Furthermore, the co-generation of the present invention has an advantage in that the frosting of the outdoor heat exchanger and the reducing of the air-warming capacity according to the frosting are prevented as the refrigerant is evaporated only at the supply heat exchanger and not passing through the outdoor heat exchanger when the air conditioner is under the air-warming mode and has a water boiling request.

Moreover, the co-generation of the present invention has an advantage in that the consumption electricity needed for operating the air conditioner is reduced as the heat recovered from the drive source, such as the engine and etc, increases the evaporation pressure as used for evaporating the refrigerant when the air conditioner is under the air warming mode and has a water-boiling request.
FIG. 1 is a block diagram of the co-generation according to the conventional art.
FIG. 2 is a block diagram illustrating the air conditioner of an embodiment of the co-generation according to the present invention operating for air-cooling and under water boil mode,
FIG. 3 is a block diagram illustrating the air conditioner of an embodiment of the co-generation according to the present invention operating for air-cooling under the not water boil mode,
FIG. 4 is a block diagram illustrating the condition that the air conditioner of an embodiment of the co-generation according to the present invention operates for air warming under the outdoor fan control mode and the water boil mode,
FIG. 5 is a block diagram illustrating the air conditioner of an embodiment of the co-generation according to the present invention operating for air warming under the low-pressure control mode and the water boil mode,
FIG. 6 is a block diagram illustrating the air conditioner of an embodiment of the co-generation according to the present invention operating for air warming under the maximum supply mode and the not water boil mode,
FIG. 7 is a block diagram of another embodiment of the co-generation according to the present invention.
FIG. 8 is a block diagram of another embodiment of the co-generation according to the present invention.

Reference will now be made in detail hereinafter as for the preferred embodiment of the co-generation in accordance with the present invention with reference to the accompanying drawings.

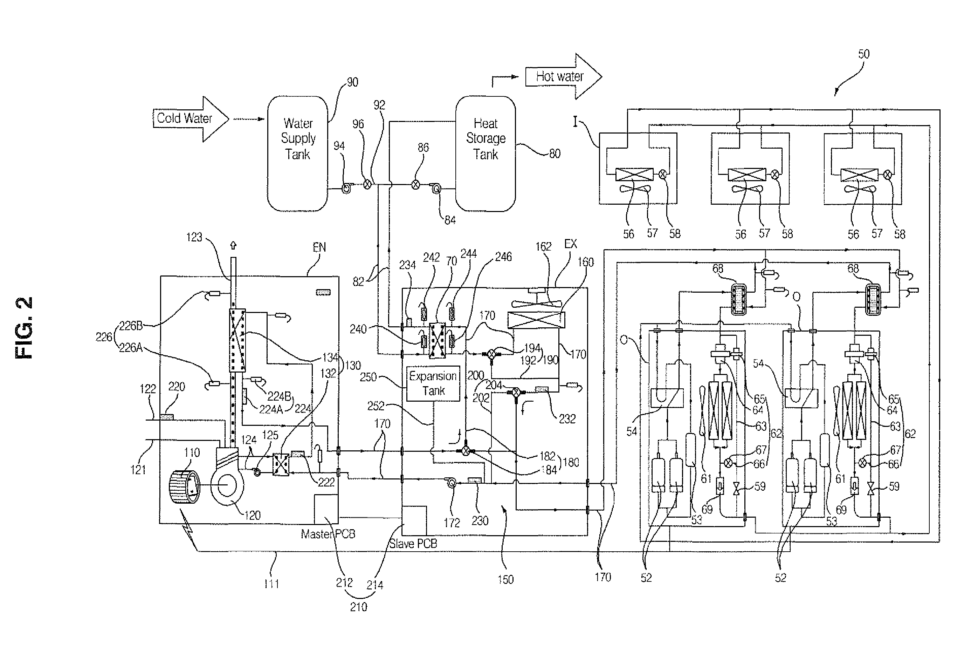

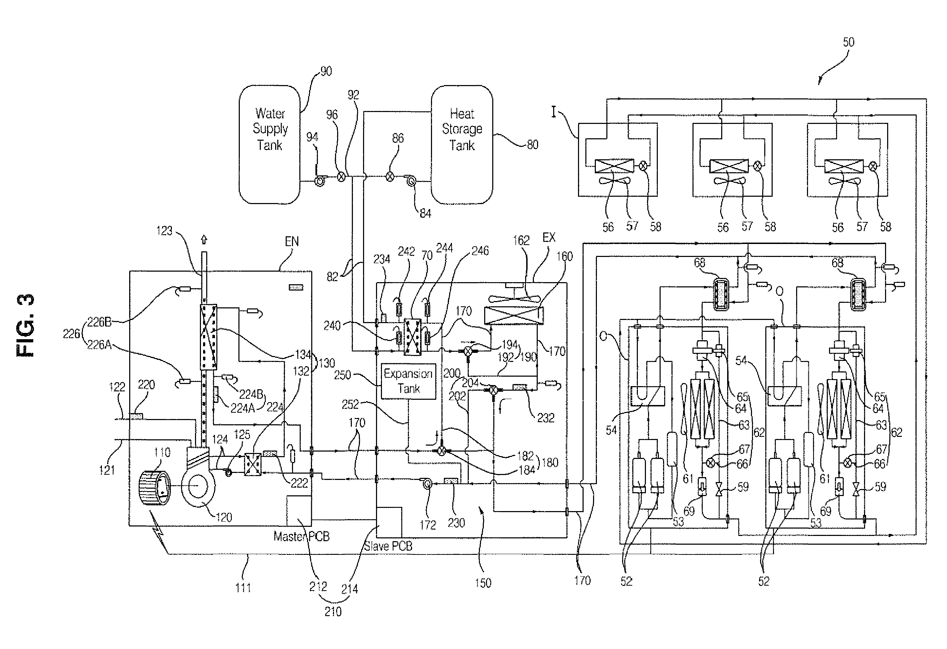

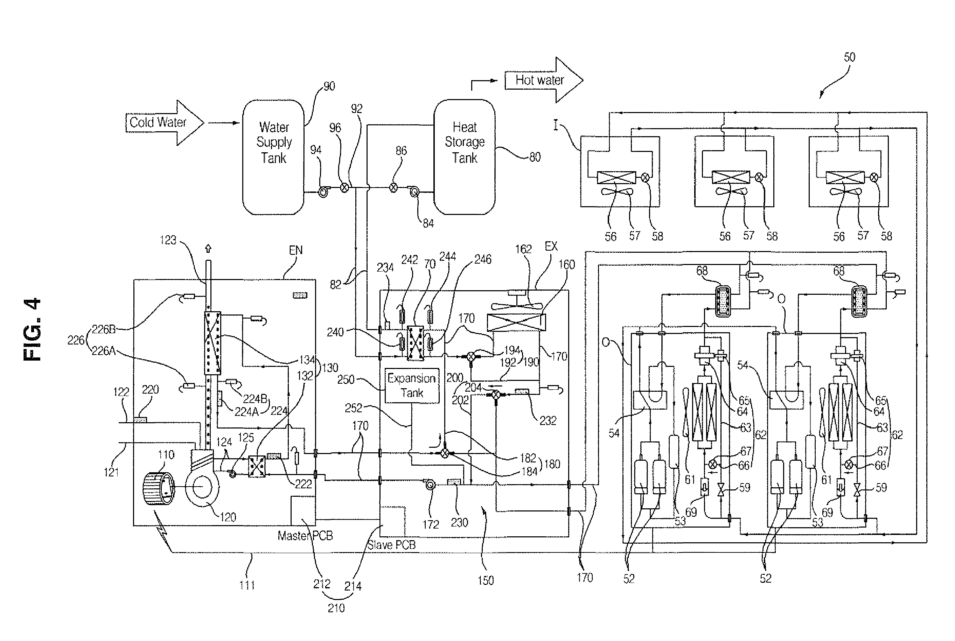

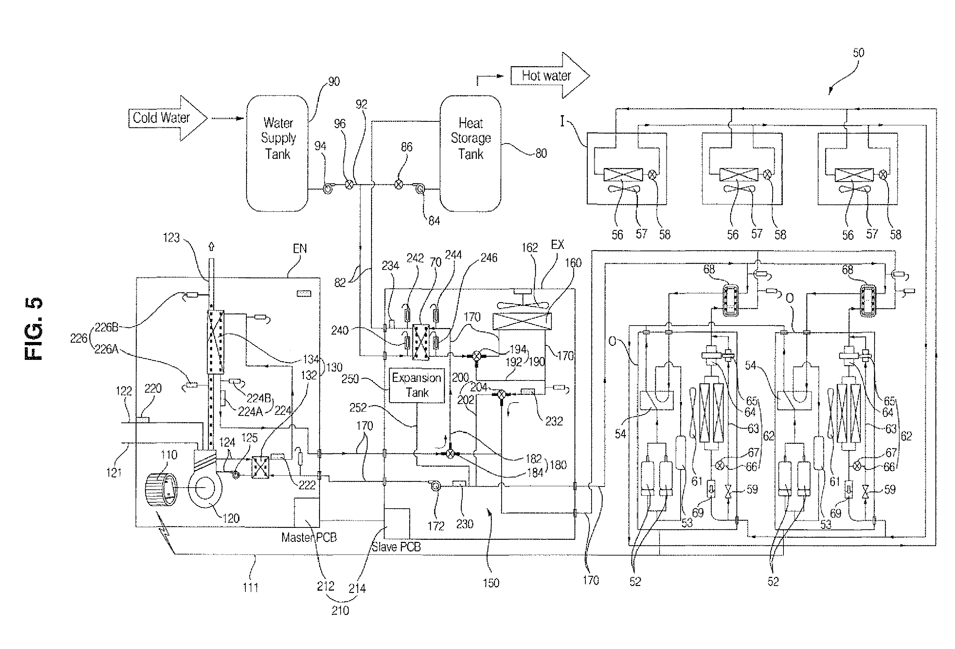

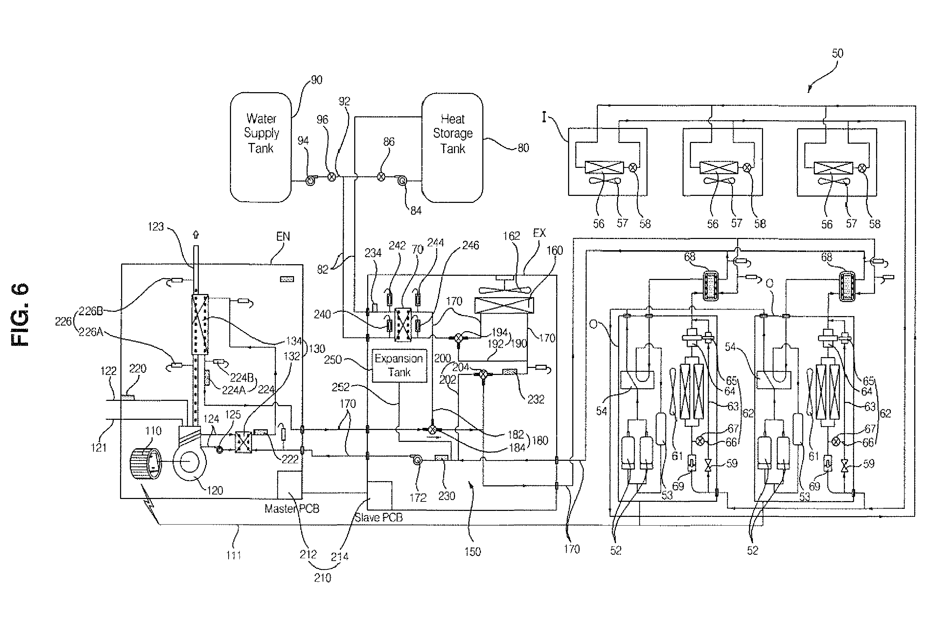

FIG. 1 is a block diagram of the co-generation according to the conventional art, FIG. 2 is a block diagram illustrating the air conditioner of an embodiment of the co-generation according to the present invention operating for air-cooling and under water boil mode, FIG. 3 is a block diagram illustrating the air conditioner of an embodiment of the co-generation according to the present invention operating for air-cooling under the not water boil mode, FIG. 4 is a block diagram illustrating the condition that the air conditioner of an embodiment of the co-generation according to the present invention operates for air warming under the outdoor fan control mode and the water boil mode, FIG. 5 is a block diagram illustrating the air conditioner of an embodiment of the co-generation according to the present invention operating for air warming under the low-pressure control mode and the water boil mode, and FIG. 6 is a block diagram illustrating the air conditioner of an embodiment of the co-generation according to the present invention operating for air warming under the maximum supply mode and the not water boil mode.

The co-generation according to the present embodiment comprises an air conditioner 50 coordinating the indoor, a water boil heat exchanger 70 boiling water, an electric generator 110 generating electricity, a drive source 120 operating the electric generator 110 and generating heat, and the heat of the exhaust gas exchanger 130 recovering the heat of the exhaust gas of the drive source 120 as illustrated in FIGS. 2 to 6.

It is possible for the air conditioner 50 to be composed of a heat pump type air conditioner including a compressor 52, a 4-way valve 54, an indoor heat exchanger 56, expansion apparatus 58 and 59, and an outdoor heat exchanger 60, and also possible to be composed of an exclusive air-cooling air conditioner including a compressor 52, an indoor heat exchanger 56, an expanding apparatus 58 and 59, and an outdoor heat exchanger 60, but not including the 4-way valve. The reference will now be made in detail as limited to the air conditioner composed of the heat pump type air conditioner on the following.

As the heat pump type air conditioner is composed of an outdoor machine ○ and an indoor machine I, it is possible that an indoor machine I is connected with an outdoor machine ○, also possible that a plurality of indoor machines I are connected in a row with an outdoor machine ○, also possible that a plurality of outdoor machines ○ are connected in a row each other, and also possible that a plurality of indoor machineries I are connected in a row each other.

The compressor 52, the 4-way valve 54, the indoor heat exchanger 56, the expansion apparatus 58, and the outdoor heat exchanger 60 are connected with the refrigerant laying pipe 61, a refrigerant path.

An accumulator 53 in which the liquid refrigerant a part of refrigerant is accumulated is installed at the suction pipe through which the refrigerant is inhaled in the compressor 52.

The 4-way valve 54 controls the inner path for flowing the refrigerant compressed at the compressor 52 to the indoor heat exchanger 56 as illustrated in FIGS. 4 to 6 when the air warming operation of the heat pump type air conditioner 50, and controls the inner path for flowing the refrigerant compressed at the compressor 52 to the outdoor heat exchanger 60 as illustrated in FIGS. 2 and 3 when the air-cooling operation of the heat pump type air conditioner 50.

An indoor fan 57 sending indoor air to the indoor heat exchanger 56 is installed beside the indoor heat exchanger 56.

The expansion apparatus 58 and 59 are described as limited to be composed of a vessel or a linear expansion valve.

The expansion apparatus 58 and 59 include an indoor expansion valve 58 controlling each amount of the refrigerant of the each indoor machinery I as installed at the indoor machinery I, and an outdoor expansion valve 59 expanding the refrigerant while the air warming operation as installed at the outdoor machinery O.

An outdoor fan 61 sending the outdoor air to the outdoor heat exchanger 60 is installed beside the outdoor heat exchanger 60.

The compressor 52, 4-way valve 54, outdoor expansion valve 59, and the outdoor heat exchanger 60 are installed at the outdoor machinery O.

The indoor heat exchanger 56 and the indoor expansion valve 58 are installed at the indoor machinery I.

The compressor 52, indoor fan 57, and the outdoor fan 61 of the heat pump type air conditioner 50 are operated by electricity generated by the electric generator 110.

The heat pump type air conditioner 50 further includes an outdoor heat exchanger bypassing apparatus 62 for bypassing of the refrigerant through the outdoor heat exchanger 60.

The outdoor heat exchanger bypassing apparatus 62 comprises an outdoor heat exchanger bypassing path 63 that an end is connected with the refrigerant pipe-call an inlet side refrigerant path on the following-connected with the inlet side of the outdoor heat exchanger 60 and the other end is connected with the refrigerant pipe-call an inlet side refrigerant path on the following- connected with the outlet side of the outdoor heat exchanger 60 for bypassing of the refrigerant expanded at the expansion apparatus 58 through the outdoor heat exchanger 60.

An outdoor expansion valve 59 is installed at the outdoor heat exchanger bypassing path 63.

The outdoor heat exchanger bypassing path 63 further comprises an outdoor heat exchanger outlet valve 64 installed at the outlet side refrigerant path, an outdoor heat exchanger bypassing path 65 opening and shutting the outdoor heat exchanger bypassing path 63, an outdoor heat exchanger connection path 66 connecting the heat exchanger bypassing path 63 and the inlet side refrigerant path, a connection path opening and shutting valve 67 installed at the outdoor heat exchanger connection path 66, a check valve 69 breaking the refrigerant current to the inlet side to stream the refrigerant flown from the indoor machine I into the outdoor heat exchanger bypassing path 63.

The co-generation further comprises a supply heat exchanger 68 installed on the refrigerant path of the heat pump type air conditioner 50 for transferring the waste heat recovered from the waste heat recovery heat exchanger 130 to the refrigerant of the heat pump type air conditioner 50, transferring the heat from the refrigerant of the heat pump type air conditioner 50 to the water boil heat exchanger 70 if necessary.

The supply heat exchanger 68 is installed on the refrigerant path between the 4-way valve 54 and the outdoor heat exchanger 60.

That is, the supply heat exchanger 68 capable of functioning as a condenser condensing the refrigerant during the air-warming operation of the heat pump type air conditioner 50 and functioning as a evaporator evaporating the refrigerant during the air warming operation of the heat pump type air conditioner 50.

A heat storage tank 80 is connected with the water circulation path 82 of at the water boil heat exchanger 70.

A heat storage circulation pump pumping the water in the heat storage tank 80 to be circulated to the heat storage tank after passing through the water boil heat exchanger 70 and a heat storage valve opening and shutting the water circulation path 82 are installed at the water circulation path 82.

A water supply tank 90 is connected with the water supply path at the water circulation path 82.

A water supply pump 94 pumping the water in the water supply tank 90 to be supplied to the water circulation path 82 and a water supply valve 96 opening and shutting the water supply path 94 are installed at the water supply path 92.

The electric generator 110 supplies electricity to the various electrical appliances, such as a heat pump type air conditioner 50 or the valorous illuminants, as one of an alternating current generator or a direct current generator, and generates electricity during the rotation of the output shaft as a rotor is connected with the output of a drive source.

The electric generator 110 supplies the electricity through the electric line as connected with the heat pump type air conditioner 50 and etc with the electric line 111.

The drive source 120 is composed of a fuel cell or the fossil fuels such as gas or petroleum and etc, and the description is limited to the engine on the following.

A fire door 121 through with the fuel, such as gas or petroleum is supplied, an air intake 122 through which the outdoor air is inhaled to the engine 120, and an air exhaust outlet 123 through which the exhaust gas exhausted from the engine 120 passes through are installed at the engine 120.

The waste heat recovery heat exchanger 130 is composed of a coolant heat exchanger 132 recovering the heat of the coolant of the engine 120 as connected with the engine 120 and the coolant line 124, and a waste heat recovery heat exchanger 134 installed at the air exhaust outlet 123for recovering exhaust heat exhausted from engine 120.

A coolant circulation pump 125 is installed at the engine 120 and the coolant heat exchanger 132 for the coolant to be circulated through the engine 120 and the coolant heat exchanger 132.

The electric generator 110, engine 120, and the waste heat recovery heat exchanger 130 are installed at the engine unit EN.

The co-generation comprises a heat transfer apparatus 150 transferring the heat of the waste heat recovery heat exchanger 130 to the heat required places, such as the water boil heat exchanger, the heat pump type air conditioner and etc.

Here, it is possible for the heat transfer apparatus 150 to be composed as transferring the heat of the waste heat recovery heat exchanger 130 only to the water heat exchanger 70 and the heat pump type air conditioner 50, transferring the heat of the waste heat recovery heat exchanger 130 to the water boil heat exchanger 70 and the heat pump type air conditioner 50, and transferring the heat of the heat pump type air conditioner 50 to the water boil heat exchanger 70 if needed.

As the water boiling capacity of the heat transferring apparatus 150 is maximized when the heat of the refrigerant is transferred to the water boil heat exchanger 70 during the air-cooling operation of the heat pump type air conditioner 50, the heat transferring apparatus 150 is described as limited that the heat of the heat of the exhaust gas exchanger 130 is transferred to the water boil heat exchanger 70 and the heat pump type air conditioner 50, and the heat of the heat pump type air conditioner 50 is transferred to the water boil heat exchanger 70, if necessary.

The heat transfer apparatus 150 includes a heat transfer path 170 connecting the waste heat recovery heat exchanger 130, the water heat exchanger 70, the radiant heat exchanger 160, and the supply heat exchanger 68.

As the radiant heat exchanger 160 exhausts the entire of a portion of the heat recovered from the heat of the exhaust gas exchanger 130 to outside if necessary, a radiant heat fan 162 sending the outside air to the radiant heat exchanger 160 is installed beside the radiant heat exchanger 160.

A heat medium circulation pump 172 for circulating of the heat medium such as an anti freezing solution-call heat medium on the following- through the heat of the exhaust gas exchanger 130, water heat exchanger 70, radiant heat exchanger 160, and the supply heat exchanger 68 is installed at the heat transfer path 170.

On the other hand, as the heat transfer apparatus 150 transfers the heat recovered from the engine 120 the most suitably in accordance with the water boil, air-cooling/ air warming, and the condition of the outdoor temperature when the heat recovered from the engine, the heat medium passed through the heat of the exhaust gas exchanger 130, bypasses at least one of the water boil heat exchanger 70, radiant heat exchanger 160, and the supply heat exchanger 68, it is described as limited that the heat medium passed through the remained heat exchanger 130 bypasses through each of the heat exchanger 70, 160, and 68 on the following.

The heat transfer apparatus 150 further includes the water boil/radiant heat exchanger bypassing apparatus 180 formed for bypassing of the heat of the heat of the exhaust gas exchanger 130 through the water boil heat exchanger and the radiant heat exchanger.

The water boil/ radiant heat exchanger bypassing apparatus 180 includes a water boil/ radiant heat exchanger bypassing path 182 formed at the heat transfer path 170; and a water boil/ radiant heat exchanger bypassing valve 184 installed at the diverging point of the water boil/radiant heat exchanger bypassing path 182 and the heat transfer path 170.

The heat transfer apparatus 150 further includes a radiant heat exchanger bypassing apparatus 190 bypassing the heat of the heat of the exhaust gas exchanger 130 through the radiant heat exchanger 160.

The radiant heat exchanger bypassing apparatus 190 includes a radiant heat exchanger bypassing path 192 formed at the heat transfer path 170; and a radiant heat exchanger bypassing valve 194 installed at the diverging point of the radiant heat exchanger bypassing path 192 and the heat transfer path 170.

The heat transfer apparatus 150 further includes a supply heat exchanger bypassing apparatus 200 bypassing the heat of the heat of the exhaust gas exchanger 130 through the supply heat exchanger 68.

The supply heat exchanger bypassing apparatus 200 includes a supply heat exchanger bypassing path 202 formed at the heat transfer path 170; and a supply heat exchanger bypassing valve 204 installed at the diverging point of the supply heat exchanger bypassing path 202 and the heat transfer path 170.

Both of the water boil heat exchanger 70 and the radiant heat exchanger 160 are installed at the radiant unit EX of the co-generation.

All of the water boil/ radiant heat exchanger bypassing path 182, the water boil/ radiant heat exchanger bypassing valve 184, the radiant heat exchanger bypassing path 192, the radiant heat exchanger bypassing valve 194, the supply heat exchanger bypassing path 202, and the supply heat exchanger bypassing valve 204 are installed at the radiant heat unit EX of the co-generation.

The co-generation further comprises a control unit 210 controlling the water boil/ radiant heat exchanger bypassing valve 184, the radiant heat exchanger bypassing valve 194, the supply heat exchanger bypassing valve 204, the outdoor heat exchanger outlet valve 64, the outdoor heat exchanger bypassing valve 65, and the connection path opening and shutting valve 67 in accordance with the air-cooling/air warming and water boiling of the heat pump type air conditioner 50.

The control unit 210 is composed of a master PCB 212 installed at the engine unit EN, and a slave PBC 214 installed at the radiant heat unit EX and connected with the master PBC 212 by a control line.

On the other hand, various sensors perceiving the inside temperature or the flux of the engine unit EN and the heat radiant unit EX are installed at the co-generation.

An intake port temperature sensor 220 composed of a thermistor perceiving the temperature of outside air inhaled into the intake port 12, a coolant heat exchanger outlet temperature sensor 222 composed of a thermistor perceiving the temperature of the outlet of the coolant heat exchanger 132 of the heat transfer path 170, a waste gas heat exchanger outlet temperature sensor 224 composed of a thermistor 224A and RTD sensor 224B perceiving the temperature of the outlet of the waste gas heat exchanger 134 of the heat transfer path 170, and an exhaust pipe temperature sensor 226 composed of RTD sensors 226A, 226B perceiving the each temperature of front and rear of the waste gas heat exchanger 134 of the exhaust pipe 123 are installed at the engine unit EX.

The No. 1 transfer path temperature sensor 230 perceiving the before temperature of the heat medium circulation pump 172 of the heat transfer path 170, the No. 2 heat transfer path temperature sensor 232 perceiving the temperature between the radiant heat exchanger bypassing path 192 and the radiant heat exchanger bypassing valve 204 of the heat transfer path 170, and a flowmeter gauging the flux of the water circulation path 82 are installed at the radiant unit EX.

Furthermore, a water boil recover inlet temperature sensor 240 composed of an RTD sensor and the temperature sensor perceiving the temperature of the water streaming into the water heat exchanger 70; a water boil recover outlet temperature sensor 242 composed of an RTD sensor and the temperature sensor perceiving the temperature water discharged from the water heat exchanger; a water boil inlet temperature sensor 244 composed of an RTD sensor and the temperature sensor perceiving the temperature of the heat medium streaming into the water boil heat exchanger 70; and a water boil outlet temperature sensor 246 composed of an RTD sensor and the temperature sensor perceiving the temperature of the heat medium discharged from the water boil heat exchanger 70 are installed at the heat radiant unit EX.

The radiant heat unit EX is connected with the tank connection path 252 that an expansion tank 250 is connected between the heat medium circulation pump 172 and the supply heat exchanger bypassing path 202 of the heat transfer path 170.

Reference will now be made in detail as for the operation of the present invention configured as above.

First, when the engine 120 is operated, the electric generator 110 generates electricity as the rotor is rotated, and the generated electricity is supplied to the heat pump type air conditioner 50 through the power line 111 as illustrated in FIGS. 2 to 5.

The heat of the waste gas of the engine and the coolant heat of the exhaust gas are recovered at the heat of the exhaust gas exchanger 130, the coolant heat exchanger 132 and the waste heat recovery heat exchanger 134 during the operation of the engine 120.

The heat pump type air conditioner 50 controls the 4-way valve 54 to be the air-cooling mode as well as operating the compressor 52, shuts the outdoor heat exchanger bypassing valve 65 and the connection path opening and shutting valve 67 as well as opening the outdoor heat exchanger outlet valve 64 while passing the refrigerant through the outdoor heat exchanger 60, and opens the outdoor heat exchanger bypassing valve 65 and the connection path opening and shutting valve as well as shutting the outdoor heat exchanger outlet valve 64 while controlling the refrigerant not to pass through the outdoor heat exchanger 60.

Reference for the control method of the heat pump type air conditioner will now be limited as the refrigerant passes through the outdoor heat exchanger 60 for the convenience of description.

As describing the flowing of the refrigerant of the heat pump type air conditioner 50, the high-temperature and high-pressure refrigerant compressed at the compressor 52 is supplied to the supply heat exchanger passed through the 4-way valve 54 and condensed as the heat is taken away from the supply heat exchanger while passing the supply heat exchanger 68, and condensed as passing through the outdoor heat exchanger 60.

The condensed refrigerant is evaporated in the indoor heat exchanger 56 after expanded in the expansion valve 58 after transferred to the indoor machine I, and after that, transferred to the outdoor machine ○ and circulated to the compressor through the 4-way valve 54.

That is, the refrigerant of the heat pump type air conditioner 50 is condensed at the supply heat exchanger 68 and the supply heat exchanger, and cools the indoor air as evaporated in the indoor heat exchanger 56.

On the other hand, the control unit 210 controls the water boil/radiant heat exchanger bypassing valve 184 to be the water boil/ radiant heat supply mode as well as operating the heat medium circulation pump 172 for circulation of the heat medium of the heat transfer path 170 through the waste heat recovery heat exchanger 130, water boil heat exchanger 70, and the supply heat exchanger 68, and controls the supply heat exchanger bypassing valve 204 to be the supply heat exchanger mode.

At this time, as the control unit 210 controls the radiant heat exchanger bypassing valve 194 in accordance with the temperature of the heat medium, it controls the radiant heat exchanger bypassing valve 194 to be the radiant heat exchanger supply mode and when the temperature of the heat medium is over the set point, and it controls the radiant heat exchanger bypassing valve 194 to be the bypassing mode when the temperature of the heat medium is not more than the set point.

As describing the flowing of the heat medium in the heat transfer path 170, the heat medium in the heat transfer path 170 is heated as receiving the heat while passing through the waste heat recovery heat exchanger 130 during the operation of the heat medium circulation pump 172, as illustrated in FIG. 2, and it streams into the water heat exchanger 70 as passing through the water boil/ radiant heat exchanger 130.

The heat medium flown into the water boil heat exchanger 70 heats the water boil heat exchanger 70 as transferring the heat to the water boil exchanger 70, and after that, it passes through or bypasses the radiant heat exchanger 160in accordance with the temperature condition of the system.

The heat medium passed through or by passed the radiant heat exchanger 160 is supplied as a supply heat exchanger 68 after passing through the supply heat exchanger bypassing valve 204, the temperature of it is raised by receiving heat from the high temperature and high pressure refrigerant gas passing through the supply heat exchanger 68, and it is circulated to the waste heat recovery heat exchanger 130.

That is, of the co-generation, the water boiling capacity is maximized of the water boil heat exchanger 70 as the heat of the waste heat recovery heat exchanger 130 and the supply heat exchanger 68 is transferred to the water boil heat exchanger 70 through the heat transfer path 170, and the consumption electricity of the compressor 52 is reduced as the refrigerant of the heat pump type air conditioner 50 is condensed at the supply heat exchanger 68.

The co-generation controls the refrigerant to or not to pass through the outdoor heat exchanger 60 as well as operating the heat pump type air conditioner 50 to be air-cooling mode when the heat pump type air-conditioner is under the air-cooling mode without request of water boiling as illustrated in FIG 3, and controls that the heat medium in the heat transfer path 170 is circulated through the waste heat recovery heat exchanger 130 and supply heat exchanger 68.

The heat pump type air conditioner 50 controls the 4-way valve 54 to be the air-cooling mode as well as operating the compressor 52, and shuts the outdoor heat exchanger bypassing path valve 65 and the connection path 67 as well as opening the outdoor heat exchanger outlet valve 64.

The co-generation operates the heat medium circulation pump 172 for controlling the heat medium in the heat transfer path 170 to be circulated through the waste heat recovery heat exchanger 130 and the supply heat exchanger 68, controls the water boil/ radiant heat exchanger bypassing valve 184 to be the water boil/ radiant heat exchanger supply mode, controls the radiant heat exchanger bypassing valve 194 to be the radiant heat exchanger supply mode, and controls the supply heat exchanger bypassing valve 204 to be the supply heat exchanger supply mode.

On the other hand, The co-generation operates the heat medium circulation pump 172 for controlling the heat medium in the heat transfer path 170 not to be circulated through the waste heat recovery heat exchanger 130 and the supply heat exchanger 68, controls the water boil/ radiant heat exchanger bypassing valve 184 to be the water boil/radiant heat exchanger supply mode, controls the radiant heat exchanger bypassing valve 194 to be the radiant heat exchanger supply mode, and controls the supply heat exchanger bypassing valve 204 to be the supply heat exchanger bypassing mode.

Reference for the control method of the heat pump type air conditioner will now be limited as the refrigerant passes through the supply heat exchanger 68 for the convenience of description.

As describing the flowing of the refrigerant of the heat pump type air conditioner 50, the high-temperature and high-pressure refrigerant compressed at the compressor 52 is supplied to the supply heat exchanger passed through the 4-way valve 54 and condensed as the heat is taken away from the supply heat exchanger while passing the supply heat exchanger 68, and condensed as passing through the outdoor heat exchanger 60.

The refrigerant condensed is evaporated in the indoor heat exchanger 56 after expanded in the expansion valve 58 after transferred to the indoor machine I, and after that, transferred to the outdoor machine O and circulated to the compressor through the 4-way valve 54.

That is, the refrigerant of the heat pump type air conditioner 50 is condensed at the supply heat exchanger 68 and the outdoor heat exchanger 60, and cools the indoor air as evaporated in the indoor heat exchanger 56.

As describing the flowing of heat medium of the heat transfer path 170, illustrated In FIG. 2, the heat medium in the heat transfer path 170 is boiled as receiving heat while passing through the waste heat recovery heat exchanger 130 during the operation of the heat medium circulation pump 172, streams into the water boil heat exchanger 70 as passing through the water boil/ radiant heat exchanger bypassing valve 184, streams into the radiant heat exchanger 192 after passing through the water boil heat exchanger 70, and radiates heat to outside as passing through the radiant heat exchanger 192.

The heat medium radiated is supplied to the supply heat exchanger 68 after passing through the supply heat exchanger bypassing valve 204, the temperature of it gets higher as receiving heat from the high-temperature and high-pressure refrigerant gas passing through the supply heat exchanger 68, and then, circulated to the waste heat recovery heat exchanger 130.

The over heating in the inside of the engine unit EN is prevented as the heat of the waste heat recovery heat exchanger 130 is radiated at the waste heat recovery heat exchanger through the heat transfer path 170, and the consumption electricity of the compressor 52 is minimized as the condensing capacity of the heat pump type air conditioner 50 is increased.

On the other hand, when the heat pump type air conditioner 50 is under the air warming mode without water boiling request, as illustrated in FIG. 4, the co-generation passes the refrigerant through the outdoor heat exchanger 60 as well as operating the heat pump type air-conditioner 50 to be air warming mode, and controls the heat medium in the heat transfer path 170 to be circulated through the waste heat recovery heat exchanger 130 and water heat exchanger 70 or, as illustrated in FIG 5, controls the refrigerant not to be circulated through the outdoor heat exchanger 60 as well as operating the heat pump type air conditioner 50 to be the air warming mode, and controls the heat medium in the heat transfer path 170 to be circulated through the waste heat recovery heat exchanger 130, water boil heat exchanger 70, and the supply heat exchanger 68.

Here, it is desirable for the co-generation, as illustrated in FIG 4, to maximize the capacity of heat recovering to the water boil heat exchanger 70 and the capacity of water boiling as controlling the refrigerant to pass through the outdoor heat exchanger 60 and the heat medium in the heat transfer path 170 to be circulated through the waste heat recovery heat exchanger 130 and the water heat exchanger 70 when the outdoor temperature is not cold enough for the outdoor heat exchanger not frosted over, and it is desirable for the co-generation, as illustrated in FIG 5, to prevent deterioration of the water boiling capacity may be generated when the outdoor heat exchanger 60 is frosted over as stopping the passing of refrigerant through the outdoor heat exchanger 60 and controlling the heat medium in the heat transfer path 170 to be circulated through the waste heat recovery heat exchanger 130, water boil heat exchanger 70, and the supply heat exchanger 68.

Reference will now be made in detail to the case passing the refrigerant to the outdoor heat exchanger 60 as well as operating the heat pump type air conditioner 50 to be the air warming mode controlling the heat medium in the heat transfer path 170 to be circulated through the waste heat recovery heat exchanger 130 and the water boil heat exchanger 70, as illustrated in fig. 4.

The heat pump type air conditioner 50 controls the 4-way valve 54 to be the air-warming mode as well as operating the compressor 52, shuts the outdoor heat exchanger bypassing valve 65 as well as opening the outdoor heat exchanger outlet valve 64 and the connection path opening and shutting valve 67.

As, describing the flowing of refrigerant in the heat pump type air conditioner 50, the high-temperature and high-pressure refrigerant compressed at the compressor 52 passes through the 4-way valve 54 and transferred to the indoor machine I, condensed while passing through the indoor heat exchanger 60 of the indoor machine I, and expanded while passing through the indoor expansion valve 58.

The refrigerant expanded at the indoor expansion valve 58 is transferred to the outdoor machine O and expanded again while passing through the outdoor expansion valve 59, and streams into the outdoor heat exchanger 60.

The refrigerant flown into the outdoor heat exchanger 60 evaporated while passing through the outdoor heat exchanger 60, passes through the supply heat exchanger 68 without heat exchanging, and circulated to the compressor 52 after passing through the 4-way valve 54.

That is, the refrigerant in the heat pump type air conditioner warms indoor as condensed at the indoor heat exchanger 56 and evaporated at the outdoor heat exchanger 60.

The control unit 210 controls the water boil/ radiant heat exchanger bypassing valve 184 to be the water boil/ radiant heat exchanger supply mode as well as operating the heat medium circulation pump 172 to circulate the heat medium in the heat transfer path 170 through the waste heat recovery heat exchanger 130 and the water boil heat exchanger 70, and controls the supply heat exchanger bypassing valve 204 to be the supply heat exchanger bypassing mode.

As the control unit 210 controls the radiant heat exchanger bypassing valve 194 in accordance with the temperature, it controls the radiant heat exchanger bypassing valve 194 to be the radiant heat exchanger supply mode when the temperature of the heat medium is over the set point, and controls the radiant heat exchanger bypassing valve 194 to be the bypassing mode when the temperature is not more than the set point.

As describing the flowing of the heat medium in the heat transfer path 170, the heat medium in the heat transfer path 170 is heated as receiving heat while passing through the waste heat recovery heat exchanger 130 during the operation of the heat medium circulation pump 172, illustrated in FIG 4, and streams into the water boil heat exchanger 70 as passing through the water boil/ radiant heat exchanger bypassing valve 184.

The heat medium flown into the water boil heat exchanger 70 heats the water boil heat exchanger as transferring heat to the water boil heat exchanger 70, and passes through or bypasses the radiant heat exchanger 160 in accordance with the temperature condition and etc of the system.

The heat medium passed through or bypassed the radiant heat exchanger 160 bypasses the supply heat exchanger 68 after passing through the supply heat exchanger bypassing valve 204, and circulated through the radiant heat exchanger 130.

That is, the water boiling capacity of the water boil heat exchanger 70 of the co-generation is improved as the heat of the radiant heat exchanger 130 is transferred to the water heat exchanger 70 through the heat transfer path 170.

Reference will now be made in detail to the case not passing the refrigerant to the outdoor heat exchanger 60 as well as operating the heat pump type air conditioner 50 to be the air warming mode and controlling the heat medium in the heat transfer path 170 to be circulated through the waste heat recovery heat exchanger 130, water boil heat exchanger 70, and the supply heat exchanger 68.

As describing the flowing of the refrigerant of the heat pump type air conditioner 50, the high-temperature and high-pressure refrigerant compressed at the compressor 52 is transferred to the indoor machine I as passing through the 4-way valve, condensed while passing through the indoor heat exchanger 60 of the indoor machine I, and expanded while passing through the indoor expansion valve 58.

The refrigerant expanded at the indoor expansion valve 58 is transferred to the outdoor machine O and expanded again while passing through the outdoor expansion valve 59, and bypasses the outdoor heat exchanger 60.

The refrigerant bypassed the outdoor heat exchanger 60 is evaporated as receiving heat from the supply heat exchanger 68 while passing through the supply heat exchanger 68, and is circulated to the compressor after passing through the 4-way valve 54.

That is, the refrigerant 50 of the heat pump type air conditioner 50 is condensed at the indoor heat exchanger 56, and is warming the indoor air as evaporated at the supply heat exchanger 68.

The control unit 210 controls the water boil/ radiant heat exchanger bypassing valve 184 to be water boil/ radiant heat exchanger supply mode as well as operating the heat medium circulation pump 172 for the heat medium in the heat transfer path 170 to be circulated through the waste heat recovery heat exchanger 130, water boil heat exchanger 70, and the supply heat exchanger 68, and controls the supply heat exchanger bypassing valve 204 to be the supply heat exchanger supply mode.

As the control unit 210 controls the radiant heat exchanger bypassing valve 194 in accordance with the temperature of the heat medium, it controls the radiant heat exchanger bypassing valve 194 to be the radiant heat exchanger supply mode when the temperature of the heat medium is over the set point, and it controls the radiant heat exchanger bypassing valve 194 to be bypassing mode when the temperature of the heat medium is not more than the set point.

As describing the flowing of the heat medium in the heat transfer path 170, the heat medium in the heat transfer path 170 is heated as receiving heat while passing through the waste heat recovery heat exchanger 130 during the operation of the heat medium circulation pump 172, illustrated in FIG. 5, and it streams into the water boil heat exchanger 70 after passing through the water/ radiant heat exchanger bypassing valve 184.

The heat medium flown into the water boil hea0t exchanger 70 heats the water boil heat exchanger 70 as transferring heat, and passes through or by passes the radiant heat exchanger 160 in accordance with the temperature condition of the system.

The heat medium passed through or bypassed the radiant heat exchanger 160 is supplied to the supply heat exchanger 68 through the supply heat exchanger bypassing valve 204, evaporates the refrigerant as heating the refrigerant passing through the supply heat exchanger 68, and is circulated to the waste heat recovery heat exchanger 130.

That is, the water boiling capacity of the water heat exchanger 70 of the co-generation is improved as the heat of the waste heat recovery heat exchanger 130 is transferred to the water boil heat exchanger 70 through the heat transfer path 170, and the frosting g and the following problem, reducing of the air warming capacity may be generated when the refrigerant passes through the outdoor heat exchanger 60 are prevented as the supply heat exchanger 68 can stop passing the refrigerant through the outdoor heat exchanger as operating as a evaporator.

The co-generation controls the refrigerant no to pass through the outdoor heat exchanger 60 as well as operating the heat pump type air conditioner 50 to be the air warming mode, and controls the heat medium in the heat transfer path 170 not to be circulated through the waste heat recovery heat exchanger 130, supply heat exchanger 68, and the water boil heat exchanger 70 when the heat pump type air conditioner 50 is under the air warming mode without water boiling request, illustrated in FIG. 6.

The heat pump type air conditioner 50 controls the 4-way valve 54 to be the air warming mode as well as operating the compressor 52 and opens the outdoor heat exchanger bypassing valve 65 as well as shutting the outdoor heat exchanger outlet valve 64 and the connection path opening and shutting valve 67.

As describing the flowing of the refrigerant in the heat pump type air conditioner 50, the high-temperature and high-pressure refrigerant compressed at the compressor 52 is transferred to the indoor machine as passing through the 4-way valve 54, condensed while passing through the indoor heat exchanger 60 of the indoor machine I, and expanded while passing through the indoor expansion valve 58.

The refrigerant expanded at the indoor expansion valve 58 is transferred to the outdoor machine O and expanded again while passing through the outdoor expansion valve 59, and bypasses the outdoor heat exchanger 60.

The refrigerant bypassed the outdoor heat exchanger 60 is evaporated while passing through the supply heat exchanger 68, and circulated to the compressor 52 as passing through the 4-way valve 54.

That is, the refrigerant of the heat pump type air conditioner 50 warms the indoor air as condensed at the indoor heat exchanger 56 and evaporated at the supply heat exchanger 68.

The control unit 210 operates the heat medium circulation pump 172 for the heat medium in the heat transfer path 170 to be circulated through the waste heat recovery heat exchanger 130 and the supply heat exchanger 68, and controls the water boil/ radiant heat exchanger bypassing valve 184 to be the water boil/ radiant heat exchanger bypassing mode for the heat medium not to pass through the water boil heat exchanger 70.

As describing the flowing of the heat medium of the heat transfer path 170, during the operation of heat medium circulation pump 172, as illustrated in FIG. 6, the heat medium in the heat transfer path 170 is heated as receiving heat while passing through the waste heat recovery heat exchanger 130, then, bypasses the water boil heat exchanger 70 the radiant heat exchanger 160, and stream into the supply heat exchanger 68.

The heat medium flown into the supply heat exchanger 68 evaporates the refrigerant as heating the refrigerant passing through the supply heat exchanger 68, and is circulated to the waste heat recovery heat exchanger 130.

That is, the heat of the waste heat recovery heat exchanger 130 of the co-generation is not transferred to the water boil heat exchanger 70, but is centralized to the supply heat exchanger 68, and the consumption electricity of the compressor 52 is reduced as the pressure is risen with the evaporation of the refrigerant of the heat pump type air-conditioner 50 at the supply heat exchanger 68.

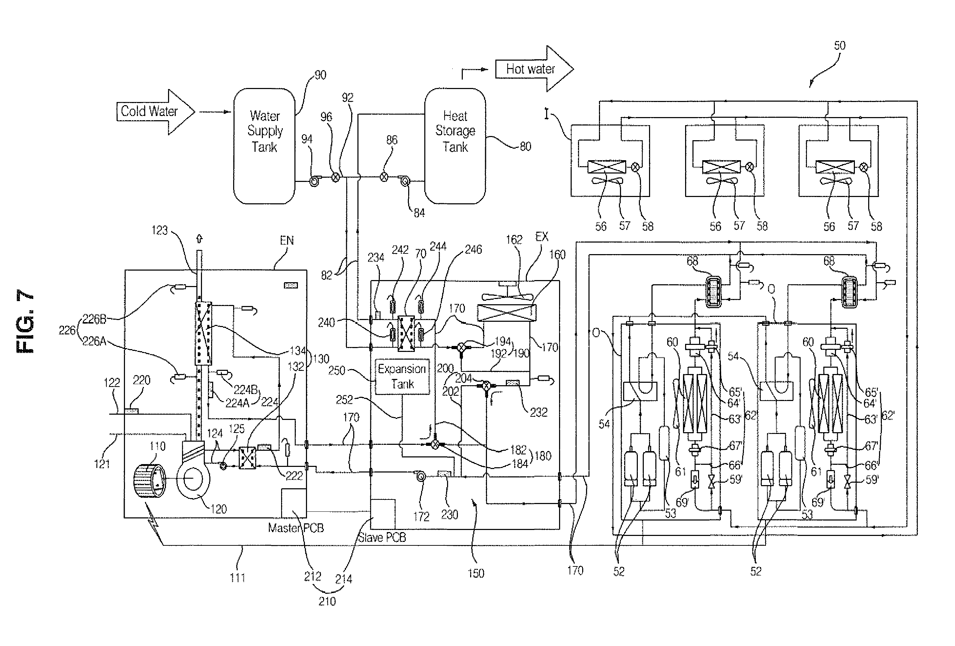

FIG. 7 is a block diagram of another embodiment of the co-generation according to the present invention.
The co-generation according to the present embodiment, as illustrated in FIG. 7, comprises an outdoor heat exchanger bypassing apparatus 63' that the outdoor heat exchanger bypassing apparatus 62' is connected with the inlet side refrigerant path and the outlet side refrigerant path of the outdoor heat exchanger 60 during the air-warming operation of the heat pump type air conditioner; an outdoor heat exchanger outlet valve 64' installed at the outlet side refrigerant path of the outdoor heat exchanger 60; an outdoor heat exchanger bypassing valve 65' opening and shutting the outdoor heat exchanger bypassing path; an outdoor heat exchanger connection path 66' connecting the outdoor heat exchanger bypassing path 63' and the inlet side refrigerant path; an outdoor heat exchanger inlet valve 67' installed at the inlet side refrigerant path of the outdoor heat exchanger 60.

An outdoor expansion valve 59' is installed at the outdoor heat exchanger bypassing path 63' with the co-generation according to an embodiment of the present invention.

The outdoor heat exchanger bypassing apparatus 62' includes a check valve 69 breaking the current of the refrigerant to the inlet side refrigerant path side for streaming the refrigerant flown from the indoor machine I to the outdoor heat exchanger bypassing path 63 during the air-warming operation of the heat pump type air conditioner.

The co-generation, as the co-generation illustrated in FIGS. 2 to 4, shuts the outdoor heat exchanger bypassing valve 65' as well as opening the outdoor heat exchanger outlet valve 64' and the outdoor heat exchanger inlet valve 67' in case of passing the refrigerant through the outdoor heat exchanger 60, and opens the outdoor heat exchanger bypassing valve 65' as well as shutting the outdoor heat exchanger outlet valve 64' and the outdoor heat exchanger inlet valve in case of not passing the refrigerant through the outdoor heat exchanger 60 as the co-generation illustrated in FIGS. 5 to 6.

As the other composition and operation excepting the outdoor heat exchanger bypassing apparatus 62' of the co-generation according to the present invention are the same or similar to the co-generation according to an embodiment of the present invention, the same referential marks are used, and the detailed description on it is omitted.

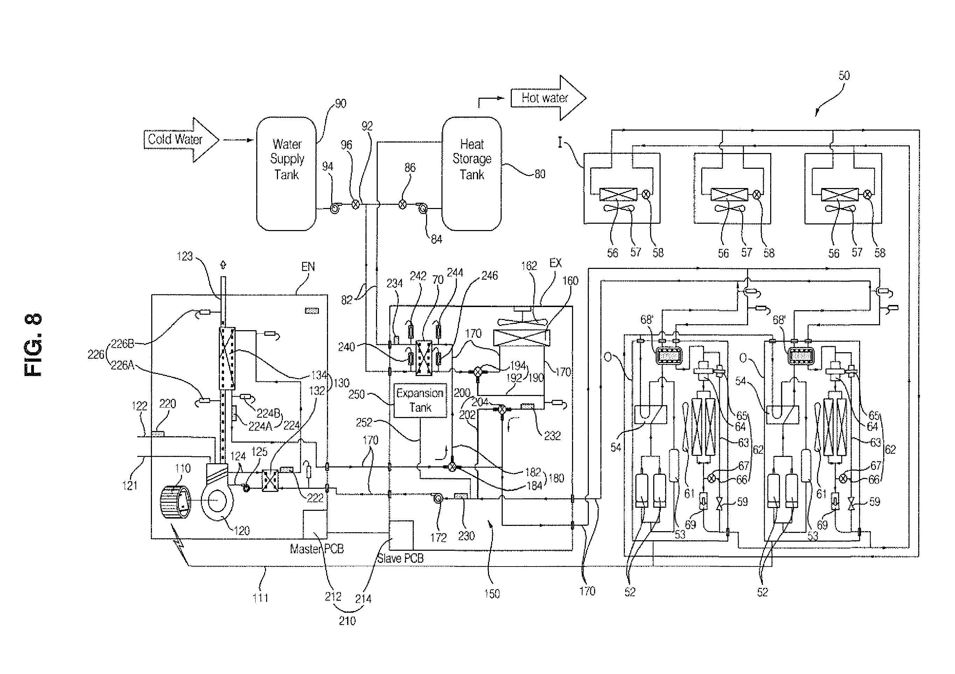

FIG. 8 is a block diagram of another embodiment of the co-generation according to the present invention.

The supply heat exchanger 68' of the co-generation according to the present embodiment is installed in the inside of the outdoor machine O, and the same referential marks are used as other compositions are the same or similar to the co-generation according to an embodiment of the present invention, and the detailed description on it is omitted.

A part of the heat transfer path 170 connected with the supply heat exchanger 68' is arranged as passing through the outdoor machine O.

On the other hand, the present invention isn't limited to the above-mentioned embodiment, and it is possible to be comprised with the water boil heat exchanger 70, the water boil heat exchanger bypassing apparatus, the supply heat exchanger 68, and the supply heat exchanger bypassing apparatus 200 without the waste heat recovery heat exchanger 160 and the waste heat recovery heat exchanger bypassing apparatus 190, and it is possible for the engine unit EN and the heat radiant unit EX to be composed in a single composition, and various embodiments are possible in the scope the present invention is included.

Reference will now be made in detail as for the effects of the co-generation according to the present invention configured as above.

The c-generation of the present invention has some advantages in that the water boiling capacity is maximized as the heat recovered from the drive source such as an engine and etc is used for water boiling and the heat of the refrigerant recovered while the refrigerant is condensed at the supply heat exchanger, and the consumption electricity required for operating the air conditioner is reduced as the condensing pressure of the refrigerant at the supply heat exchanger is descended,

Further, the co-generation of the present invention has an advantage in that the water boiling capacity is maximized as it is possible for the refrigerant to be evaporated only at the outer heat exchanger and not to pass the supply heat exchanger when the air conditioner is under the air-warming mode and has a water boiling request.

Furthermore, the co-generation of the present invention has an advantage in that the frosting occurred when the refrigerant is evaporated at the outdoor heat exchanger and the decreasing of the air warming capacity caused by the frosting are prevented as it is possible for the refrigerant for the refrigerant to be evaporated only at the supply heat exchanger and no to pass the outdoor heat exchanger when the air conditioner is under the air-warming mode and has a water boiling request.

Moreover, the co-generation of the present invention has an advantage in that the consumption electricity required for operating the air conditioner is reduced as the heat recovered from the drive sources such as the engine and etc is used for evaporating the refrigerant at the supply heat exchanger and so as to increase the evaporation pressure when the air conditioner is under the air warming mode and doesn't have a water boiling request.

## Claims

1. A co-generation comprising:
an electric generator (110);
a drive source (120) operating the electric generator (110);
a waste heat recovery heat exchanger (130) recovering the exhaust gas heat of the drive source (120);
a water boil heat exchanger (70) installed for boiling water;
an air conditioner (50) air-conditioning indoor air;
a radiant heat exchanger (160) radiating heat to outside;
a supply heat exchanger (68) installed on the refrigerant path of the air conditioner (50); and
a heat transfer path (170) connecting the waste heat recovery heat exchanger (130), water boil heat exchanger (70), the radiant heat exchanger (160), and the supply heat exchanger (168).

2. The co-generation according to claim 1,
wherein the co-generation further comprises a water boil/radiant heat exchanger bypassing apparatus (180) bypassing the heat of the waste heat recovery heat exchanger (130) through the water boil heat exchanger (70) and radiant heat exchanger (160);
a radiant heat exchanger bypassing apparatus (190) bypassing the heat of the waste heat recovery heat exchanger (130) through the radiant heat exchanger (160); and
a supply heat exchanger bypassing apparatus (200) bypassing the heat of the waste heat recovery heat exchanger (130) through the supply heat exchanger (68).

3. The co-generation according to claim 2,
wherein the water boil/radiant heat exchanger bypassing apparatus (180) comprises a water boil/radiant heat exchanger bypassing path (182) formed at the heat transfer path (170); and
a water boil/radiant heat exchanger bypassing valve (184) installed at the diverging point of the water boil/radiant heat exchanger bypassing path (182) and the heat transfer path (170).

4. The co-generation according to claim 2,
wherein the radiant heat exchanger bypassing apparatus (190) comprises a radiant heat exchanger bypassing path (192) formed at the heat transfer path (170); and
a radiant heat exchanger bypassing valve (194) installed at the diverging point of the radiant heat exchanger bypassing path (192) and the heat transfer path (170).

5. The co-generation according to claim 2,
wherein the supply heat exchanger bypassing apparatus (200) comprises a supply heat exchanger bypassing path (202) formed at the heat transfer path (170); and
a supply heat bypassing valve (204) installed at the diverging point of the supply heat exchanger bypassing path (202) and the heat transfer path (170).

6. The co-generation according to any of claims 1 to 5,
wherein the air conditioner (50) is a heat pump type air conditioner including a compressor (50), a 4-way valve (54), an outdoor heat exchanger (60), an expansion apparatus (58) and (59), and an indoor heat exchanger (56).

7. The co-generation according to claim 6,
wherein the heat pump type air conditioner (50) further includes an outdoor heat exchanger bypassing apparatus (62) and (62') formed for bypassing the refrigerant through the outdoor heat exchanger (60).

8. The co-generation according to claim 6,
wherein the supply heat exchanger (68) is installed on the refrigerant path between the 4-way valve (54) and the outdoor heat exchanger (60).

9. The co-generation according to one of the claims 1 to 8,
wherein the co-generation further comprises a water boil heat exchanger (70), a heat storage tank connected with the water circulation path (82), and a water supply tank connected with the water circulation path (82) and the water supply path (92).

10. The co-generation according to claim 9,
wherein a heat storage circulation pump (84) pumping the water in the heat storage tank (80) to be circulated to the heat storage tank (80) after passing through the water boil heat exchanger (70) and a heat storage valve (86) opening and shutting the water circulation path (82) are installed at the water circulation path (82).
